# EUROPEAN PATENT SPECIFICATION

(11) **EP 4 206 151 B1**
(45) Date of publication and mention of the grant of the patent: **11.02.2026**
(21) Application number: 22216908.8
(22) Date of filing: 28.12.2022
(51) Int. Cl.: C03B 9/16, C03B 9/193

(54) **HANDLING UNIT FOR MOVING A MOLD CLOSING ELEMENT OF A MACHINE FOR FORMING GLASS ARTICLES**
HANDHABUNGSEINHEIT ZUM BEWEGEN EINES FORMSCHLIESSELEMENTS EINER MASCHINE ZUR HERSTELLUNG VON GLASARTIKELN
UNITÉ DE MANIPULATION POUR DÉPLACER UN ÉLÉMENT DE FERMETURE DE MOULE D'UNE MACHINE DE FORMATION D'ARTICLES EN VERRE

(30) Priority: 29.12.2021 IT 202100032888
(43) Date of publication of application: 05.07.2023
(73) Proprietor: Bottero S.p.A., 12100 Cuneo (IT)
(72) Inventor: CHIAVASSA, Danilo, 12100 CUNEO (IT); GROSSO, Luca, 12100 CUNEO (IT); OSTORERO, Marcello, 12100 CUNEO (IT); VIADA, Bruno, 12100 CUNEO (IT)
(74) Representative: Studio Torta S.p.A.

(56) References cited:
- US-A- 3 383 193
- US-A- 4 695 307
- US-A1- 2012 111 424

## Description

### TECHNICAL FIELD

The present invention relates to a handling unit for moving a mold closing element of a forming machine for producing hollow glass articles.

### BACKGROUND

As is known, forming machines, universally known as IS machines, are used to form hollow glass articles.

Such machines comprise a plurality of forming sections arranged side by side, into each of which a succession of drops of glass enters and from each of which a succession of formed hollow glass articles exits.

Each molding section comprises a blank mold and a finishing mold arranged downstream of the blank mold. Both molds can have a single forming cavity or a plurality of forming cavities arranged next to one another.

Regardless of the number, each forming cavity is open in an upward direction and must be closed fluid-tight at the top during the forming phase of the glass article.

Each cavity is accordingly provided with a related closing element which extends vertically and closes the related cavity completely in the case of blank molds, or partially in the case of finishing molds, thus allowing a flow of compressed forming air to be introduced into the finishing molds from above.

The closing elements of a same mold are carried by a dedicated supporting head, which is connected to a free end of an arm. The arm extends in a cantilever manner from a motorized vertical drive shaft, and is coupled to said shaft by means of a respective attachment clamp fixed to the column by means of clamping screws.

The vertical shaft and, together with the latter, the related arm are vertically movable in order to move the related closing elements between a raised resting position and a lowered operating position, in which the related closing elements are coupled to the respective mold in a fluid-tight manner.

As is known, IS machines are set up to be provided with different molds depending on the article to be produced. These molds have different dimensions and, in particular, different heights.

Therefore, at each mold change, the height position of the closing elements must be adjusted according to the height of the mold that will be mounted on the machine and so that the closing elements are always coupled tightly to the mold when arranged in their lowered operating position.

Adjustment is currently carried out manually by a team of responsible operators, who, at each mold change, demount the closing elements and mount the respective setting templates, known in the jargon as "callipers" or "face mold", in their stead.

Each face mold is dimensioned so as to couple with the mold on the machine in exactly the same way as the related closing element and has a height that is less than the height of the related closing element so as to take into account the inevitable deformations of the handling unit under working conditions.

The use of face molds is rendered necessary and indispensable by the fact that the closing elements end, at the bottom, in sharp edges that would be damaged during the manual adjustment in the event of an accidental contact or collision of the closing elements with the new mold, and in any case if they are not arranged exactly in the intended correct operating position.

Once the face molds are mounted, still manually, the clamping screws of the clamp are loosened under the control of one of the responsible operators and the arm and the related head lowered or raised until the face molds are coupled to and in abutment with the related mold underneath.

Once this position has been reached, which is assumed as the new reference height position, the clamp is, still manually, tightened again on the vertical shaft, effectively rendering the arm integral with said vertical shaft, after which the face molds are demounted and, in their stead, the closing elements dedicated to the new mold are mounted on the machine.

As mentioned above, the foregoing steps are repeated manually at each mold change and for both molds in each of the forming sections.

Although universally implemented, the above-described manner of setting the closing elements is hardly satisfactory for the following reasons.

First of all, it is immediately obvious how this makes it necessary, for each mold that can be mounted on the machine, to have on hand a plurality (one for each mold cavity) of face molds, with imaginable costs both in terms of the manufacture as well as the storage and handling of said face molds.

Moreover, the setting of the closing elements of the entire forming machine requires, at each mold change, extremely large amounts of time which increase with the number of sections due to the aforementioned mounting, demounting and remounting operations, with inevitable losses in terms of production.

As mentioned above, the foregoing operations require, for each mold in the section, at least a pair of responsible operators. This is because at least one of the operators has to support the arm-head assembly while the other operator loosens the clamping screws of the clamp and both accompany the arm and related head during the vertical repositioning. The loosening of the screws, the accompanying of the head and the correct positioning and coupling of the face molds to the related mold are operations that require experience and considerable coordination between the operators inasmuch as they must be conducted so as to avoid a jamming of the clamp on the shaft due to the fact that the arm and the head protrude in a cantilever manner from the vertical shaft.

The foregoing operations are also rendered difficult by the fact that the operators are forced to work while standing above the base of the machine and straddling the related molds and thus in awkward and dangerous working conditions.

In all cases, a significant and prolonged physical effort is required of the operators and, in general, the aforementioned operations inevitably involve a very long downtime of the machine.

US2012111424A1 discloses a module for transferring a component of an I. S. glass molding machine, such as a blow head, along a transfer curve. The latter includes a first partial movement consisting of a pivot movement around a horizontal axis and a second partial movement consisting of a vertically oriented linear movement.

US3383193A relates to an apparatus for forming hollow glass articles, comprising an arm adapted to be connected to a baffle, and movable to close a molding cavity. The arm can be reciprocated and oscillated towards and away from the mold. A cam is provided for causing the arm to rotate through a predetermined arc during its vertical travel, and the rotation takes place only until the arm is a predetermined linear distance from the mold.

US4695307A discloses a mechanism for moving a member defined by a baffle, funnel or blowhead. Such member is pivotally mounted on an arm so as to pivot about a first horizontal axis, and the arm is mounted to turn about a second horizontal axis. Height adjustment is provided for moving the mechanism heightwise on a column, by means of a screw threaded shaft, which is turnable about a vertical axis by applying a suitable tool to an upper end portion of this shaft.

### SUMMARY OF THE INVENTION

The aim of the present invention is to provide a handling unit for moving a mold closing element of a forming machine that allows the problems set out above to be solved in a simple and cost-effective manner.

A particular aim of the present invention is to provide a handling unit that allows an adjustment of the closing elements to be carried out quickly, extremely safely and precisely while eliminating operator discretion.

A further aim of the present invention is to provide a handling unit that allows drastically reducing or at least simplifying manual operations, reducing or eliminating the physical effort required of operators, as well as reducing the number of operators responsible for such adjustments so as to minimize operating costs and machine downtime.

A last aim of the present invention is to provide a handling unit which is simple and cost-effective to produce, compact and which can be inspected and operated from the outside.

According to the present invention, a handling unit for moving at least one mold closing element in a machine for forming glass articles is provided, as defined in the appended claims.

### BRIEF DESCRIPTION OF THE DRAWINGS

The invention will now be described with reference to the accompanying drawings, which illustrate a non-limiting embodiment thereof, wherein:
Figure 1 illustrates, in a partially and substantially block layout, a forming machine for forming glass articles equipped with a preferred embodiment of a handling unit for moving closing elements of the forming machine, which handling unit is embodied in accordance with the teachings of the present invention;
Figure 2 illustrates, in an elevation side and perspective view, the handling unit of Figure 1;
Figure 3 is a figure analogous to Figure 2 and illustrates a variant of a detail of Figure 2;
Figure 4 illustrates, on a larger scale, a detail of Figure 2;

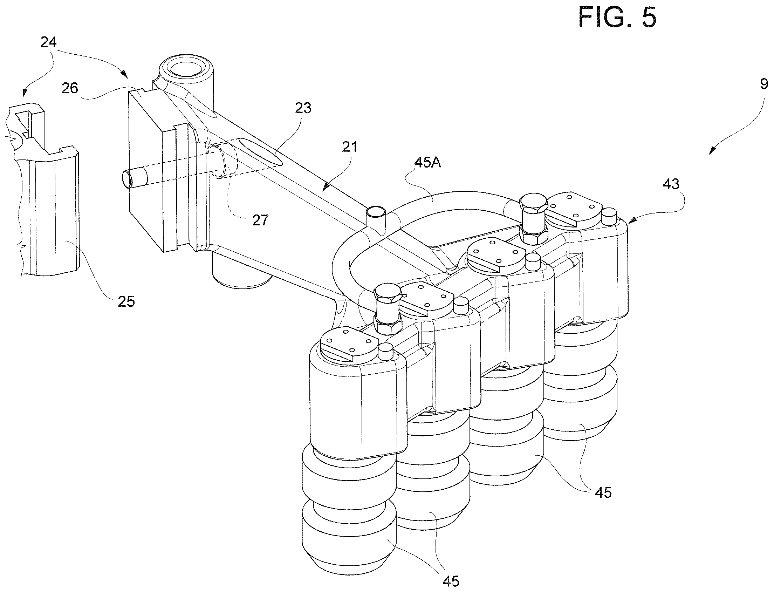

Figure 5 illustrates, on a larger scale, a variant of a detail of Figure 2; and

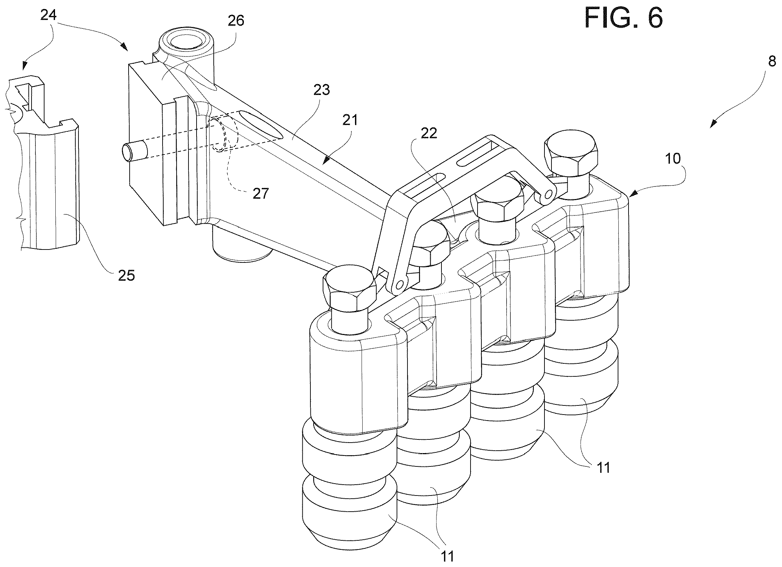

Figure 6 illustrates a connection coupling of Figure 2 broken down into its constituent parts.

### DESCRIPTION OF PREFERRED EMBODIMENTS

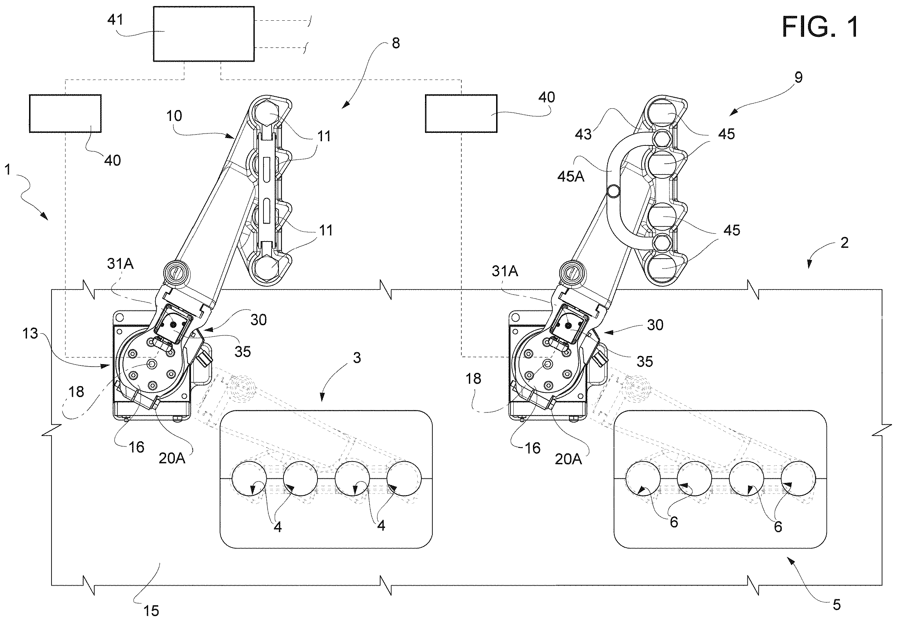

In Figure 1, a forming machine for forming glass articles, generally known as an IS machine, is indicated, as a whole, by 1.

The machine 1 comprises a plurality of forming sections 2, only one of which is visible in the attached figures.

Each forming section 2 comprises a blank mold 3 comprising, in this specific case, four forming cavities 4 arranged side by side and open in an upward direction and a finishing mold 5 also comprising four finishing cavities 6 open in an upward direction.

According to variants not illustrated, the molds 3 and 4 comprise a different number of cavities 4,6.

Regardless of the number of cavities 4,6, the machine 1 further comprises a closing assembly 8 for closing the cavities 4 of the blank mold 3 and a closing assembly 9 for closing the cavities 6 of the finishing mold 5 and configured to allow compressed air to be introduced into said cavities 6.

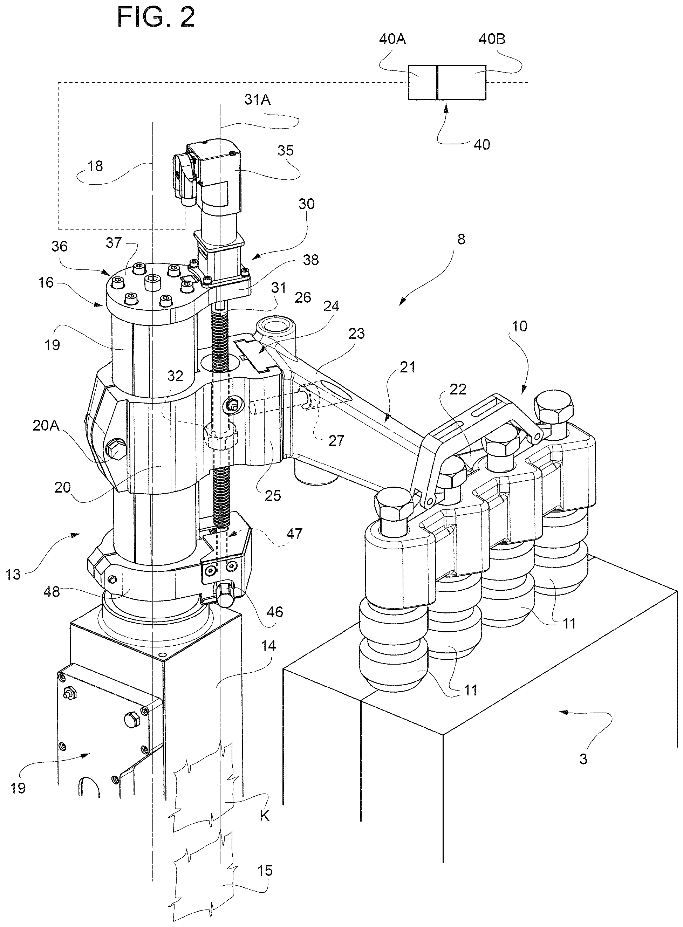

With reference to Figure 2, the assembly 8 comprises a supporting head 10 and, for each cavity 4, a closing element 11, known *per se* and not described in detail.

Each closing element 11 is coupled to the head 10 in a manner known *per se,* protrudes vertically downwards and is configured to couple with the mold 3 in order to completely close the related cavity 4.

Each assembly 8 further includes a handling unit 13 for moving the head 10 and the related closing elements 11.

The unit 13 comprises a dedicated attachment frame 14 fixed to a structure 15 of the machine 1 in proximity of the blank mold 3 (Figure 1).

According to the invention, the unit 13 further comprises a related drive shaft 16, which has a vertical axis 18, a straight upper end section 19 projecting upwards beyond the frame 14 and a lower end section (not visible in the attached figures) coupled to a drive device K, known *per se* and not described in detail, for moving the shaft 16 with a roto-translatory motion along the axis 18.

According to the invention, the unit 13 finally comprises a slide 20 coupled to the section 19 so as to be slidable along the axis 18 in opposite directions. The unit 13 also comprises an arm 21 that supports the head 10 and extends orthogonally to the axis 18.

Preferably, the slide 20 can be locked manually from the outside by means of a dedicated wrench acting, for example, on a screw 20A.

Alternatively, the slide 20 is locked on the section 19 by means of a motorized locking device, e.g., of a mechanical friction or magnetic type and in any event a device that can be controlled from outside the machine or remotely.

The arm 21 comprises a free end portion 22 firmly connected to the head 10 and an attachment end portion 23, opposite the portion 22 and coupled to the slide 20 by means of a releasable coupling 24 for the quick replacement of the arm-supporting head assembly.

Conveniently, the coupling 24 comprises a vertical guide 25 parallel to the axis 18 and firmly connected to the slide 20, and a slide 26 firmly connected to the attachment portion 23 and couplable from above to the guide 25. The slide 26 is clamped on the guide 25 in a releasable manner by means of a clamping screw 27, which can be actuated manually from the outside by means of a dedicated wrench. Alternatively, the slide 26 is locked on the guide 25 by means of a motorized locking device, e.g., of a mechanical friction or magnetic type and in any event a device that can be controlled from outside the machine or remotely.

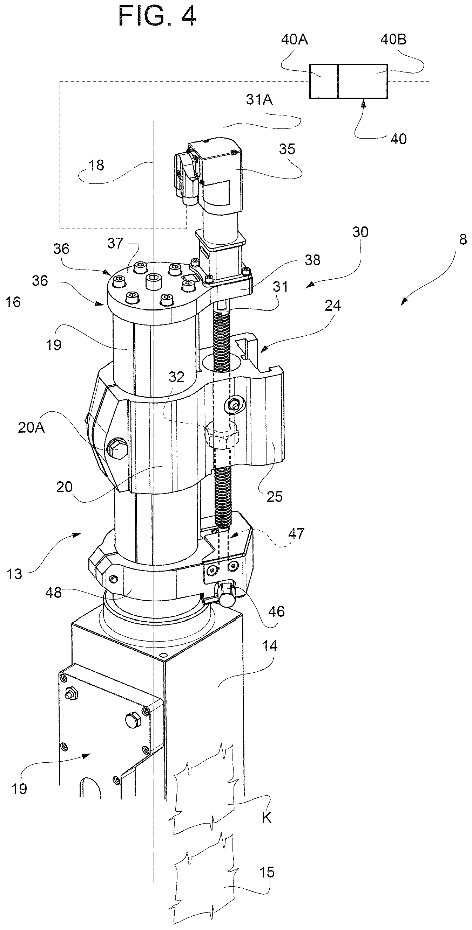

With reference to Figure 4 and according to the invention, the slide 20 is movable along the section 19 under the thrust of a mechanical transmission 30, which in the described example is of a screw type. Alternatively, the mechanical transmission 30 is a toothed transmission or some other equivalent linear transmission.

The transmission 30 comprises a screw 31 arranged outside the section 19 of the vertical shaft 16 and coupled to the vertical shaft 16 in a rotatable manner about its axis 31A and in an axially fixed position, and a nut screw 32 engaged by the screw 31 and coupled to the slide 20 in a vertically and angularly fixed position with respect to said slide 20.

Again with reference to Figures 2 and 4, the screw 31 is rotated by an electric motor 35. Conveniently, the transmission 30 comprises an attachment bracket 36, in turn comprising an anchoring portion 37 arranged resting on an upper end of the shaft 16 and an attachment portion 38 protruding in a cantilevered manner from the anchoring portion 37. The screw 30 is coupled to the attachment portion 38 in a rotatable manner and in an axially fixed position, protrudes upwards beyond said attachment portion 38 and is firmly connected to the rotor of the motor 35.

Conveniently, the motor 35 extends upwards from the attachment portion 38, to which it is firmly attached.

Still with reference to Figure 2, the electric motor 35 is commanded and controlled by a command and control unit 40.

The unit 40 comprises a memory block 40A storing, for each mold 3,5 that is installable on the machine 1, a respective reference position of the closing elements 11, i.e. their correct height position, and a command and control block 40B for controlling the motor 35 and moving the closing elements 11 into the reference or operating positions depending on the mold currently mounted on the machine 1.

Conveniently, each unit 40 communicates with a general machine unit 41 that synchronizes the position adjustment activities of all relevant closing elements 11 by controlling all of said closing assemblies in response to a mold change program.

Again with reference to Figure 1, each assembly 9 is similar to the assembly 8 described in the foregoing, from which it differs only by comprising, instead of the head 10, a head 43 that supports closing elements 45.

The closing elements 45, also known *per se,* differ from the elements 11 in that they couple to each cavity 6 fluid-tightly and respectively define a respective compressed air supply duct within the related cavities 6.

The head 43 further differs from the head 10 in that it carries ducts 45A for supplying compressed air to the respective closing elements 45.

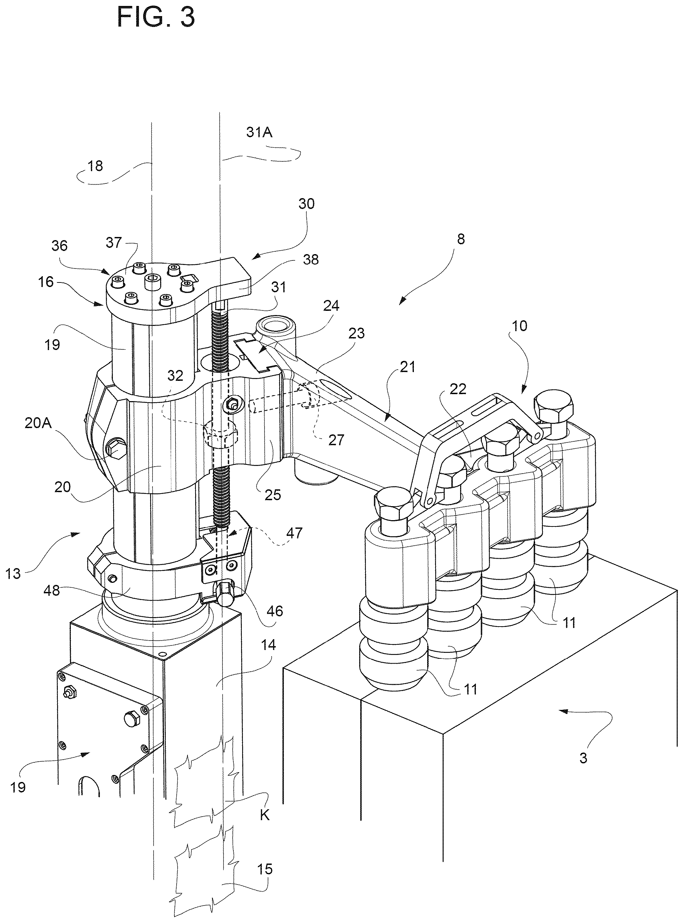

In the variant illustrated in Figure 3, the screw 31 is rotated about its own axis 31A by acting manually from the outside on a motion input shaft 46, which is part of a worm screw - worm gear transmission 47, fixed to the portion 19 of the shaft 16 by means of a collar 48 (Figure 2). The shaft 46 extends orthogonally to the axis 31A outside the arm 21 and slide 20, and the transmission 47 forms part of the transmission 30.

It is evident from the foregoing that the use of a slidable slide along the section 19 of the vertical shaft 16 and the presence of the transmission 30 allow a single operator responsible for the section 2 to correctly position the closing elements 11,45 at each mold change in an extremely short period of time, simply by acting from the outside on the shaft 46 by means of a common crank or manoeuvring wrench or by controlling the motors 35 via the units 40, and without the need to intervene on the device K that drives the shaft 16.

In any case, the precision and continuity with which the arms 21, and with them the related heads 10,43, are moved, allow a single operator to carry out the height adjustment at a mold change without the need to demount and remount the closing elements 11,45 from the related heads 10,43 and, above all, compared to known solutions, to be able to adjust the height of the closing elements 11 and 45 without having to use "face molds", which can consequently be completely eliminated, thus fundamentally solving all the problems linked with the handling and storage of the same.

In particular, during the adjustment performed by the transmission 30, the arms 21 only move with a translatory motion, i.e. they translate while remaining parallel to themselves, so that the spatial orientation of the closing elements 11,45 is not altered.

Using the 35 motors also practically eliminates the physical effort required of operators inasmuch as they can operate remotely on the individual section 2 or simultaneously on the entire machine in response to an issued mold change command.

Compared to known solutions, the physical effort is reduced even without the motors 35 inasmuch as the adjustment is limited to the mere rotation of a crank or wrench couplable to the shafts 46 that protrude at the front and thus in an area easily accessible from the outside and without the need to climb up onto or down from the surface supporting the molds, i.e. while remaining outside the forming section, with considerable advantages in terms of safety.

Again compared to known solutions, the presence of the drive motors 35 and the presence of the related command and control units eliminate the arbitrariness of the movement as there is a transition from little more than a visual control on the part of the operator to a fully automatic control of the individual section 2 or of the entire machine 1 on the basis of information stored in memories or databases, for example in said command and control unit.

The presence of the motors 35 and the screw-nut screw transmission 30 facilitates an extremely precise and gradual positioning of the closing elements 11,45, thus preventing any damage to said closing elements during the mold change phase.

It is also evident from the foregoing that the provided handling units 13 are simple in design, cost-effective and, above all, extremely compact as well as being immediately inspectable from the outside.

The compactness and simplicity of the design also allow the described closing assemblies 8,9 to be used on existing forming machines without requiring any particular modifications or adaptations of said machines.

It is evident from the foregoing that the described closing assemblies 8,9 can be modified and varied without departing from the scope of protection defined by the independent claims.

In particular, the arms 21 and heads 10,43 can have different shapes and geometries from those indicated, for example in order to support a different number of closing elements.

In addition, the transmissions 30 could be provided with both motors 35 and transmissions 47 so as to be capable of manual operation in any operating condition including failures of the electrical control.

## Claims

1. A handling unit (13) for moving at least one mold closing element of a machine for forming glass articles, the handling unit (13) comprising:
- a frame (14) adapted to be fixed to a fixed structure of the machine;
- a shaft (16) having a vertical axis (18);
- a drive device (K) for motorizing and moving said shaft (16) with a roto-translatory motion along said vertical axis (18) relative to said frame;
- an arm (21) protruding in a cantilever manner from said shaft (18) and configured to support said closing element; and
- coupling means which couple said arm (21) to said shaft (16);
said shaft (16) comprising a straight upper end section (19), projecting upwards beyond said frame (14), and a lower end section coupled to said drive device (K) for moving the shaft (16) with said roto-translatory motion;
**characterized in that** said coupling means comprise:
- a slide (20) coupled to said straight upper end section (19) so as to be slidable along said vertical axis (18) in opposite directions;
- a mechanical adjustment transmission (30) for continuously adjusting the vertical position of said arm (21) along said shaft (16) according to the height of the mold;
said slide being movable along said straight upper end section (19) under the thrust of said mechanical transmission (30).

2. The handling unit according to claim 1, **characterized in that** said mechanical adjustment transmission (30) comprises a drive shaft protruding outside said arm (21) and manually operable from the outside.

3. The handling unit according to claim 1 or 2, **characterized by** comprising an electric motor (35) for driving said mechanical adjustment transmission (30), and a command and control unit (40) for controlling said electric motor.

4. The handling unit according to claim 3, **characterized in that** said command and control unit (40) comprises memory means storing, for each said mold mountable on said machine, a respective reference position in height for said closing element, and command and control means for controlling said electric motor and moving said closing element into the reference position corresponding to the mold mounted on the machine.

5. The handling unit according to claim 3 or 4, **characterized in that** said electric motor (35) is arranged above a free upper end of said shaft (16).

6. The handling unit according to any one of the preceding claims, **characterized in that** said mechanical adjustment transmission (30) is a screw transmission or a toothed transmission.

7. The handling unit according to any one of the preceding claims, **characterized in that** said slide (20) is freely sliding in opposite directions along said shaft (16), and wherein said mechanical adjustment transmission (30) comprises:
- a screw arranged outside said shaft (16) and coupled to said shaft (16) in a rotatable manner about its axis and in an axially fixed position, and
- a nut screw engaged by said screw and coupled to said slide in a vertically and angularly fixed position with respect to said slide.

8. The handling unit according to claim 7, **characterized in that** said mechanical adjustment transmission (30) comprises an attachment bracket having:
- an anchorage portion arranged resting on an upper end of said shaft (16) and
- an attachment portion protruding in a cantilever manner from said anchorage portion;
said screw being coupled to said attachment portion in a rotatable manner and in an axially fixed position.

9. The handling unit according to any one of the preceding claims, **characterized in that** said slide (20) is freely sliding in opposite directions along said shaft (16), and wherein said arm (21) comprises an end portion couplable to said closing element and an end attachment portion opposite said end portion; a quick-change releasable coupling being interposed between said end attachment portion and said slide.

10. The handling unit according to claim 9, **characterized in that** said releasable coupling comprises:
- a vertical guide parallel to the vertical axis (18) of said shaft (16) and carried by said slide and
- a further slide carried by said end attachment portion and couplable from above to said guide;
locking means being provided to lock said further slide on said guide in a fixed vertical position.

11. The handling unit according to any one of the preceding claims, **characterized in that** said slide (20) is freely sliding in opposite directions along said shaft (16), and wherein the handling unit (13) comprises motorized locking means for locking said slide along said shaft (16) and are operable remotely.

12. A closing assembly for closing at the top and at least partially a forming mold of a machine for forming glass articles; the closing assembly comprising an attachment head, at least one closing element coupled to said attachment head and configured to couple with said mold for closing at least partially said mold, and a handling unit for moving said attachment head; **characterized in that** said handling unit is as claimed in claim 1.

13. A forming machine for producing hollow glass articles, the machine comprising at least one forming section for forming hollow glass articles; the forming section comprising:
- a blank mold which can be chosen from a plurality of blank molds different from one another and comprising at least one forming cavity for a glass blank;
- a finishing mold which can be chosen from a plurality of finishing molds different from one another and comprising at least one finishing cavity for said blank and,
- for each said mold, a respective closing assembly for completely or partially closing a top opening of the respective cavity;
at least one of said closing assemblies being as claimed in claim 12.

14. The machine according to claim 13, **characterized in that** each said mold comprises a relative said motorized closing assembly; an electronic command and control unit being provided to control all of said closing assemblies in response to a mold change program.

## Patentansprüche

1. Handhabungseinheit (13) zum Bewegen mindestens eines Formschließelements einer Maschine zum Formen von Glasartikeln, wobei die Handhabungseinheit (13) Folgendes umfasst:
- einen Rahmen (14), der an einer festen Struktur der Maschine befestigt werden kann;
- eine Welle (16) mit einer vertikalen Achse (18);
- eine Antriebsvorrichtung (K) zum Motorisieren und Bewegen der Welle (16) mit einer rototranslatorischen Bewegung entlang der vertikalen Achse (18) relativ zu dem Rahmen;
- einen Arm (21), der freitragend von der Welle (18) vorsteht und konfiguriert ist, um das Schließelement zu tragen; und
- Kopplungsmittel, die den Arm (21) an die Welle (16) koppeln;
wobei die Welle (16) einen geraden oberen Endabschnitt (19), der nach oben über den Rahmen (14) hinausragt, und einen unteren Endabschnitt umfasst, der mit der Antriebsvorrichtung (K) gekoppelt ist, um die Welle (16) mit der rototranslatorischen Bewegung zu bewegen;
**dadurch gekennzeichnet, dass** Kopplungsmittel Folgendes umfassen:
- einen Schlitten (20), der an den geraden oberen Endabschnitt (19) gekoppelt ist, um entlang der vertikalen Achse (18) in entgegengesetzte Richtungen verschiebbar zu sein;
- ein mechanisches Einstellgetriebe (30) zum kontinuierlichen Einstellen der vertikalen Position des Arms (21) entlang der Welle (16) entsprechend der Höhe der Form;
wobei der Schlitten unter dem Druck des mechanischen Getriebes (30) entlang des geraden oberen Endabschnitts (19) bewegbar ist.

2. Handhabungseinheit nach Anspruch 1, **dadurch gekennzeichnet, dass** das mechanische Einstellgetriebe (30) eine Antriebswelle umfasst, die aus dem Arm (21) herausragt und manuell von außen betätigt werden kann.

3. Handhabungseinheit nach Anspruch 1 oder 2, **dadurch gekennzeichnet, dass** sie einen Elektromotor (35) zum Antreiben des mechanischen Einstellgetriebes (30) und eine Befehls- und Steuereinheit (40) zum Steuern des Elektromotors umfasst.

4. Handhabungseinheit nach Anspruch 3, **dadurch gekennzeichnet, dass** die Befehls- und Steuereinheit (40) Speichermittel, die für jede an der Maschine montierbare Form eine jeweilige Referenzposition in der Höhe für das Schließelement speichern, und Befehls- und Steuermittel zum Steuern des Elektromotors und Bewegen des Schließelements in die Referenzposition, die der an der Maschine montierten Form entspricht, umfasst.

5. Handhabungseinheit nach Anspruch 3 oder 4, **dadurch gekennzeichnet, dass** der Elektromotor (35) oberhalb eines freien oberen Endes der Welle (16) angeordnet ist.

6. Handhabungseinheit nach einem der vorhergehenden Ansprüche, **dadurch gekennzeichnet, dass** das mechanische Einstellgetriebe (30) ein Schraubgetriebe oder ein Zahngetriebe ist.

7. Handhabungseinheit nach einem der vorhergehenden Ansprüche, **dadurch gekennzeichnet, dass** der Schlitten (20) frei in entgegengesetzten Richtungen entlang der Welle (16) gleitet, und wobei das mechanische Einstellgetriebe (30) umfasst:
- eine außerhalb der Welle (16) angeordnete Schraube, die um ihre Achse drehbar und in einer axial fixierten Position mit der Welle (16) gekoppelt ist, und
- eine Mutterschraube, in die die Schraube eingreift und die mit dem Schlitten in einer vertikal und winkelmäßig festen Position in Bezug auf den Schlitten gekoppelt ist.

8. Handhabungseinheit nach Anspruch 7, **dadurch gekennzeichnet, dass** das mechanische Einstellgetriebe (30) eine Befestigungshalterung umfasst, die Folgendes aufweist:
- einen Verankerungsabschnitt, der auf einem oberen Ende der Welle (16) aufliegend angeordnet ist, und
- einen Befestigungsabschnitt, der freitragend von dem Verankerungsabschnitt vorsteht;
wobei die Schraube drehbar und in einer axial fixierten Position mit dem Befestigungsabschnitt gekoppelt ist.

9. Handhabungseinheit nach einem der vorhergehenden Ansprüche, **dadurch gekennzeichnet, dass** der Schlitten (20) frei in entgegengesetzten Richtungen entlang der Welle (16) gleitet, und wobei der Arm (21) einen Endabschnitt, der mit dem Schließelement koppelbar ist, und einen Endbefestigungsabschnitt gegenüber dem Endabschnitt umfasst; wobei eine schnell austauschbare, lösbare Kupplung zwischen dem Endbefestigungsabschnitt und dem Schlitten angeordnet ist.

10. Handhabungseinheit nach Anspruch 9, **dadurch gekennzeichnet, dass** die lösbare Kupplung umfasst:
- eine vertikale Führung parallel zur vertikalen Achse (18) der Welle (16), die von dem Schlitten getragen wird, und
- einen weiteren Schlitten, der von dem Endbefestigungsabschnitt getragen wird und von oben an die Führung koppelbar ist;
wobei Verriegelungsmittel bereitgestellt sind, um den weiteren Schlitten an der Führung in einer festen vertikalen Position zu verriegeln.

11. Handhabungseinheit nach einem der vorhergehenden Ansprüche, **dadurch gekennzeichnet, dass** der Schlitten (20) frei in entgegengesetzten Richtungen entlang der Welle (16) gleitet, und wobei die Handhabungseinheit (13) motorisierte Verriegelungsmittel zum Verriegeln des Schlittens entlang der Welle (16) umfasst und fernbedienbar ist.

12. Schließanordnung zum Schließen an der Oberseite und zumindest teilweise einer Formgebungsform einer Maschine zum Formen von Glasartikeln; wobei die Schließanordnung einen Befestigungskopf, zumindest ein Schließelement, das mit dem Befestigungskopf gekoppelt ist und dazu konfiguriert ist, mit der Form zum Schließen zumindest teilweise der Form zu koppeln, und eine Handhabungseinheit zum Bewegen des Befestigungskopfs umfasst; **dadurch gekennzeichnet, dass** die Handhabungseinheit wie in Anspruch 1 beansprucht ist.

13. Formgebungsmaschine zum Herstellen von Hohlglasartikeln, wobei die Maschine mindestens einen Formgebungsabschnitt zum Formen von Hohlglasartikeln umfasst; wobei der Formgebungsabschnitt umfasst:
- eine Rohlingsform, die aus einer Vielzahl von voneinander verschiedenen Rohlingsformen ausgewählt werden kann und mindestens einen Formhohlraum für einen Glasrohling umfasst;
- eine Endbearbeitungsform, die aus einer Vielzahl von voneinander verschiedenen Endbearbeitungsformen ausgewählt werden kann und mindestens einen Endbearbeitungshohlraum für den Rohling umfasst, und
- für jede Form eine jeweilige Schließanordnung zum vollständigen oder teilweisen Verschließen einer oberen Öffnung des jeweiligen Hohlraums;
wobei mindestens eine der Schließanordnungen wie in Anspruch 12 beansprucht ist.

14. Maschine nach Anspruch 13, **dadurch gekennzeichnet, dass** jede Form eine relative motorisierte Schließanordnung umfasst; wobei eine elektronische Befehls- und Steuereinheit bereitgestellt ist, um alle Schließanordnungen als Reaktion auf ein Formwechselprogramm zu steuern.

## Revendications

1. Unité de manipulation (13) pour déplacer au moins un élément de fermeture de moule d'une machine de formation d'articles en verre, l'unité de manipulation (13) comprenant :
- un cadre (14) destiné à être fixé à une structure fixe de la machine ;
- un arbre (16) ayant un axe vertical (18) ;
- un dispositif d'entraînement (K) pour motoriser et déplacer ledit arbre (16) avec un mouvement roto-translatoire le long dudit axe vertical (18) par rapport audit cadre ;
- un bras (21) faisant saillie en porte-à-faux à partir dudit arbre (18) et configuré pour supporter ledit élément de fermeture ; et
- des moyens de couplage qui couplent ledit bras (21) audit arbre (16) ;
ledit arbre (16) comprenant une section d'extrémité supérieure droite (19), faisant saillie vers le haut au-delà dudit cadre (14), et une section d'extrémité inférieure couplée audit dispositif d'entraînement (K) pour déplacer l'arbre (16) avec ledit mouvement roto-translatoire ;
**caractérisé en ce que** lesdits moyens de couplage comprennent :
- une glissière (20) couplée à ladite section d'extrémité supérieure droite (19) de manière à pouvoir coulisser le long dudit axe vertical (18) dans des directions opposées ;
- une transmission mécanique de réglage (30) pour régler en continu la position verticale dudit bras (21) le long dudit arbre (16) en fonction de la hauteur du moule ;
ladite glissière étant mobile le long de ladite section d'extrémité supérieure droite (19) sous la poussée de ladite transmission mécanique (30).

2. Unité de manipulation selon la revendication 1, **caractérisée en ce que** ladite transmission mécanique de réglage (30) comprend un arbre d'entraînement faisant saillie à l'extérieur dudit bras (21) et pouvant être actionné manuellement de l'extérieur.

3. Unité de manipulation selon la revendication 1 ou 2, **caractérisée en ce qu'**elle comprend un moteur électrique (35) pour entraîner ladite transmission mécanique de réglage (30), et une unité de commande et de contrôle (40) pour commander ledit moteur électrique.

4. Unité de manipulation selon la revendication 3, **caractérisée en ce que** ladite unité de commande et de contrôle (40) comprend des moyens de mémoire stockant, pour chaque dit moule pouvant être monté sur ladite machine, une position de référence respective en hauteur pour ledit élément de fermeture, et des moyens de commande et de contrôle pour commander ledit moteur électrique et déplacer ledit élément de fermeture dans la position de référence correspondant au moule monté sur la machine.

5. Unité de manipulation selon la revendication 3 ou 4, **caractérisée en ce que** ledit moteur électrique (35) est disposé au-dessus d'une extrémité supérieure libre dudit arbre (16).

6. Unité de manipulation selon l'une quelconque des revendications précédentes, **caractérisée en ce que** ladite transmission mécanique de réglage (30) est une transmission à vis ou une transmission dentée.

7. Unité de manipulation selon l'une quelconque des revendications précédentes, **caractérisée en ce que** ladite glissière (20) coulisse librement dans des directions opposées le long dudit arbre (16), et **en ce que** ladite transmission mécanique de réglage (30) comprend :
- une vis disposée à l'extérieur dudit arbre (16) et couplée audit arbre (16) de manière rotative autour de son axe et dans une position axialement fixe, et
- une vis-écrou engagée par ladite vis et couplée à ladite glissière dans une position fixe verticalement et angulairement par rapport à ladite glissière.

8. Unité de manipulation selon la revendication 7, **caractérisée en ce que** ladite transmission mécanique de réglage (30) comprend un support de fixation ayant :
- une partie d'ancrage disposée en appui sur une extrémité supérieure dudit arbre (16) et
- une partie de fixation faisant saillie en porte-à-faux à partir de ladite partie d'ancrage ;
ladite vis étant couplée à ladite partie de fixation de manière rotative et dans une position axialement fixe.

9. Unité de manipulation selon l'une quelconque des revendications précédentes, **caractérisée en ce que** ladite glissière (20) coulisse librement dans des directions opposées le long dudit arbre (16), et **en ce que** ledit bras (21) comprend une partie d'extrémité pouvant être couplée audit élément de fermeture et une partie de fixation d'extrémité opposée à ladite partie d'extrémité ; un raccord amovible à changement rapide étant interposé entre ladite partie de fixation d'extrémité et ladite glissière.

10. Unité de manipulation selon la revendication 9, **caractérisée en ce que** ledit couplage libérable comprend :
- un guide vertical parallèle à l'axe vertical (18) dudit arbre (16) et porté par ladite glissière et
- une autre glissière portée par ladite partie de fixation d'extrémité et pouvant être couplée par le haut audit guide ;
des moyens de verrouillage sont prévus pour bloquer ladite autre glissière sur ledit guide dans une position verticale fixe.

11. Unité de manipulation selon l'une quelconque des revendications précédentes, **caractérisée en ce que** ladite glissière (20) coulisse librement dans des directions opposées le long dudit arbre (16), et **en ce que** l'unité de manipulation (13) comprend des moyens de verrouillage motorisés pour verrouiller ladite glissière le long dudit arbre (16) et qui peuvent être actionnés à distance.

12. Ensemble de fermeture pour fermer en haut et au moins partiellement un moule de formation d'une machine de formation d'articles en verre ; l'ensemble de fermeture comprenant une tête de fixation, au moins un élément de fermeture couplé à ladite tête de fixation et configuré pour se coupler avec ledit moule pour fermer au moins partiellement ledit moule, et une unité de manipulation pour déplacer ladite tête de fixation ; **caractérisé en ce que** ladite unité de manipulation est telle que revendiquée dans la revendication 1.

13. Machine de formation pour produire des articles en verre creux, la machine comprenant au moins une section de formation pour former des articles en verre creux ; la section de formation comprenant :
- un moule d'ébauche pouvant être choisi parmi une pluralité de moules d'ébauche différents les uns des autres et comprenant au moins une cavité de formation pour une ébauche de verre ;
- un moule de finition pouvant être choisi parmi une pluralité de moules de finition différents les uns des autres et comprenant au moins une cavité de finition pour ladite ébauche et,
- pour chacun desdits moules, un ensemble de fermeture respectif pour fermer complètement ou partiellement une ouverture supérieure de la cavité respective ;
au moins l'un desdits ensembles de fermeture est tel que revendiqué dans la revendication 12.

14. Machine selon la revendication 13, **caractérisée en ce que** chaque dit moule comprend un ensemble de fermeture motorisé ; une unité électronique de commande et de contrôle étant prévue pour commander tous lesdits ensembles de fermeture en réponse à un programme de changement de moule.
